# NEUE EUROPÄISCHE PATENTSCHRIFT

(11) **EP 2 439 066 B2**
(45) Veröffentlichungstag und Bekanntmachung des Hinweises auf die Entscheidung über den Einspruch: **12.10.2022**
(45) Hinweis auf die Patenterteilung: 16.12.2015
(21) Anmeldenummer: 11183946.0
(22) Anmeldetag: 05.10.2011
(51) Int. Cl.: B32B 17/10

(54) **Verbundscheibe**
Laminated glass
Vitre feuilletée

(30) Priorität: 05.10.2010 DE 102010037966
(43) Veröffentlichungstag der Anmeldung: 11.04.2012
(73) Patentinhaber: SCHOTT AG, 55122 Mainz (DE)
(72) Erfinder: Panzner, Gerrit, 07407 Rudolstadt (DE); Freitag, Rüdiger, 36433 Etterwinden (DE); Wehmeier, Lutz, Dr., 07751 Jena (DE)
(74) Vertreter: Herrmann, Jochen

(56) Entgegenhaltungen:
- EP-A1- 0 494 548
- EP-A1- 2 090 427
- EP-A1- 2 111 977
- WO-A1-2008/084083
- WO-A1-2010/091525
- DE-A1- 2 414 575
- US-A- 5 496 640
- US-A1- 2009 246 426

## Beschreibung

Die Erfindung betrifft eine Verbundscheibe, insbesondere eine monolithische, angriffhemmende und feuerwiderstandsfähige Verglasung.

Aus dem Stand der Technik sind verschiedene Schutzverglasungen bekannt. Beispielsweise zeigt die WO 2008/068744 A1 eine Verbundscheibe, die stark durchbruchhemmende Eigenschaften aufweist. Hierzu ist ein Glaspaket bestehend aus mehreren parallel zueinander angeordneten und miteinander verbundenen Glasscheiben verwendet. Hinter dieses Glaspaket ist eine massive Scheibe aus Polycarbonat gestellt. Über die Polycarbonat-Scheibe können hohe kinetische Energien abgefangen werden. Nachteilig bei diesen durchbruchhemmenden Verglasungen ist die mangelnde Brandschutzbeständigkeit.

Aus dem Stand der Technik sind weiterhin Brandschutzverglasungen bekannt, die beispielsweise nach EN 357 klassifiziert sind. Diese Brandschutzverglasungen weisen üblicherweise zwei oder mehrere Glas- oder Glaskeramikscheiben auf, die unter Zwischenlage von intumeszierenden Brandschutzschichten miteinander verbunden sind. Die intumeszierenden Brandschutzschichten bestehen beispielsweise aus mit organischen Verbindungen versetzten Alkalisilikaten oder Schichten aus Salz gefüllten, wässrigen Acrlypolymeren (Hydrogele). Diese Materialien haben die Eigenschaft, im Brandfall an Volumen zu- und an Dichte abzunehmen. Solche Brandschutzverglasungen sichern den Raumabschluss, wobei die Wärmeleitung erheblich eingedämmt wird. Brandschutzverglasungen haben den Nachteil, dass sie die erforderliche Durchbruchhemmung nach EN 356 bzw. nach ISO 16936 nicht aufweisen.

Insbesondere bieten diese Brandschutzgläser keinen zuverlässigen Schutz gegen punktförmigen Durchschlag im Sinne der ENV 1627/ENV 1630. Derartige Brandschutzgläser sind beispielsweise in der US 2009/0246426 A1 beschrieben.

Die EP 2 090 427 A1 offenbart eine Verbundscheibe bei der zwei flächenförmige Brandschutzverglasungen miteinander unter Vermittlung einer Verbindungsschicht bestehend aus PMMA-Gießharz verbunden sind. In Figur 1 der EP 2 090 427 A1 ist eine solche Brandschutzverglasung gezeigt. Sie besteht aus mehreren Glasscheiben zwischen denen Intumeszenzschichten gehalten sind. Zwei solcher Brandschutzverglasungen können unter Vermittlung der PMMA-Gießharzschicht miteinander verbunden werden.

US 5,496,640 offenbart eine Verbundscheibe mit einer zentrischen Schicht, bestehend aus Fluorocarbon. An diese zentrische Schicht sind beidseitig Intumeszenzschichten angeschlossen. Die Verbundscheibe schließt auf beiden Seiten mit äußeren Glasscheiben ab.

Aus der DE 2 414 575 ist eine Verbundscheibe mit einer zentrisch angeordneten Platte aus Polyvinylbutyral bekannt. Beidseitig dieser Platte sind Schichten aus Natriumaluminat aufgebracht. An die Schichten aus Natriumaluminat schließen sich Acrylharzschichten an. Auf die Acrylharzschichten sind Glasscheiben aufgebracht.

In der EP 0494 548 A1 ist eine Verbundscheibe mit einer zentrischen Intumeszenzschicht beschrieben, die beidseitig von Schichten, bestehend aus Floatglas begrenzt ist. Auf die Floatglasschichten sind weitere Floatglas-Schichten aufgedoppelt. Die Vermittlung zwischen den Floatglasschichten erfolgt dabei mittels eines ausgehärteten Polyestermaterials.

Es ist Aufgabe der Erfindung, eine Verbundscheibe zu schaffen, die gute Brandschutzeigenschaften und zudem durchbruchhemmende Eigenschaften aufweist.

Diese Aufgabe wird erfindungsgemäß mit den Merkmalen des Anspruches 1 gelöst. Demgemäß weist die Verbundscheibe eine flächenförmige Brandschutzverglasung auf, bestehend aus mehreren zueinander parallelen Glasscheiben, zwischen denen intumeszierende Schichten angeordnet sind. Auf den beiden gegenüberliegenden Seitenflächen der Brandschutzverglasung ist mittelbar oder unmittelbar jeweils mindestens ein Kunststoffinterlayer angeordnet, wobei auf den der Brandschutzverglasung abgewandten Seiten der Kunststoffinterlayer jeweils wenigstens eine Glas- oder Glaskeramikscheibe angeordnet ist. Die Kunststoffinterlayer bestehen aus Polycarbonat oder Polymethylmethacrylat und weisen eine Dicke im Bereich zwischen 2 mm bis 8 mm auf. Die Kunststoffinterlayer haben eine hohe Durchbruchhemmung nach EN 356, insbesondere können ohne Weiteres Durchbruchhemmungen der Klassifizierung P8B dieser Norm und/oder der Klassifizierung nach ISO 16936-2P3B verwirklicht werden. Zusätzlich bieten diese Kunststoffinterlayer ein Widerstandsvermögen gegen punktförmige Durchdringungen/Durchschläge mit den Werkzeugsätzen der ENV 1630 und/oder der PR EN 1630. Die beiden Kunststoffinterlayer sind auf der der Brandschutzverglasung abgewandten Seiten mit wenigstens einer Glas- oder Glaskeramikscheibe hinterlegt, wobei der Begriff Glas- oder Glaskeramikscheibe vorliegend auch als Verbundglasscheibe interpretiert werden soll, der aus zwei oder mehr Scheiben, beispielsweise Kalknatronscheiben, besteht, die gegebenenfalls unter Zwischenlage von Zwischenschichten miteinander verbunden sind. Die Glas- oder Glaskeramikscheibe verhindert eine mechanische Beanspruchung des Kunststoffinterlayers und bietet zudem gegebenenfalls noch einen weiteren Schutz gegen Durchdringung.

Zur Herstellung der erfindungsgemäßen Verbundscheibe können die beiden Kunststoffinterlayer mit der Brandschutzverglasung stoffschlüssig verbunden, insbesondere verklebt, sein. Zur Optimierung des Fertigungsprozesses wird allerdings besonders bevorzugt ein Autoklavverfahren eingesetzt, bei dem die Verbundscheibe unter Druck- und Hitzeeinwirkung geformt wird. Dabei entsteht das Laminat, bei dem die Kunststoffinterlayer und die Brandschutzverglasung miteinander zuverlässig verbunden werden. Insbesondere wird dieses Autoklavverfahren möglich, da die Kunststoffinterlayer beidseitig der Brandschutzverglasung angeordnet sind und damit der Bimetalleffekt, der entsteht, wenn an einer Scheibe einseitig ein Kunststoffinterlayer anlaminiert wird, unterbunden oder zumindest minimiert ist. Dieser Bimetalleffekt entsteht aufgrund der um Größenordnungen unterschiedlichen thermischen Ausdehnungskoeffizienten von Glas und den Kunststoffinterlayern, beispielsweise Polycarbonat. Kommt es bei einer Temperaturdifferenz zwischen Fertigung (> 80°C) und Gebrauch (-20°C bis 50°C) zu sehr starken Spannungen im Laminat, so entsteht eine bogenförmige Verformung des Verbunds, der häufig schon ohne weitere äußere Last zum Bauteilversagen führt. Das erfindungsgemäße Produktdesign der Verbundscheibe minimiert diesen Bimetalleffekt und bietet im Lastfall (Brand und/oder Durchschlag bzw. Durchbruch) eine zuverlässige Funktionalität.

Erfindungsgemäß ist es vorgesehen, dass die Kunststoffinterlayer unter Zwischenlage einer Haftvermittlerschicht stoffschlüssig mit den Seiten der Brandschutzverglasung verbunden sind. Als Haftvermittlerschichten eignen sich Verklebungen oder besonders bevorzugt Schichten aus Polyurethan. Eine Fertigung im Autoklaven wird dabei insbesondere dann einfach möglich, wenn die Haftvermittlerschicht von einer Polyurethanfolie gebildet ist. Diese stellt einen zuverlässigen und festen flächenförmigen Verbund zwischen der Brandschutzverglasung und den Kunststoffinterlayern her.

Weiterhin sind gemäß der Erfindung auch die Glas- oder Glaskeramikscheiben unter Zwischenlage einer Haftvermittlerschicht stoffschlüssig mit den Kunststoffinterlayern verbunden. Hier können wieder Polyurethane, insbesondere Polyurethanfolien, eingesetzt werden.

Gemäß der Erfindung ist es vorgesehen, dass die Kunststoffinterlayer eine Dicke im Bereich zwischen ≥ 2 mm und ≤ 8 mm aufweisen. Diese Materialstärken lassen sich insbesondere im Autoklavverfahren gut mit der Brandschutzverglasung verbinden und ermöglichen so eine wirtschaftliche Fertigung.

Bevorzugterweise beträgt die Dicke der Brandschutzverglasung ≥ 7 mm, um eine ausreichende Brandschutzwirkung zu erreichen.

Die an den Kunststoffinterlayer anschließende Glas- oder Glaskeramikscheibe kann beispielsweise von einem Floatglas oder einem Verbundsicherheitsglas gebildet sein. Das Verbundsicherheitsglas besteht üblicherweise aus zwei Glasscheiben, beispielsweise Kalknatronscheiben, die über eine PVB-Folie miteinander verbunden sind. Das Verbundsicherheitsglas erhöht die Durchbruchshemmung der Verbundscheibe zusätzlich.

Die Fertigung der Verbundscheibe gelingt insbesondere dann einfach, wenn vorgesehen ist, dass die Summe der Dicken der beiden Kunststoffinterlayer kleiner oder gleich der Dicke der Brandschutzverglasung ist.

Weiterhin kann es vorgesehen sein, dass die Summe der Dicken der beiden Kunststoffinterlayer kleiner oder gleich der Dicke eines Kunststoffinterlayers ist, der für eine entsprechende angriffshemmende Klassifizierung erforderlich ist. Hierbei wird von der Erkenntnis ausgegangen, dass für bestimmte Angriffshemmungs-Klassifizierungen gewisse Mindestdicken einer Polycarbonatschicht oder dergleichen verwendet sein müssen. Es hat sich nun überraschend gezeigt, dass die gleiche Angriffshemmung im Rahmen der Erfindung auch dann erreicht werden kann, wenn diese vorgeschriebene Dicke auf zwei Kunststoffinterlayer verteilt wird. Auf diese Weise wird eine einfachere Fertigung möglich, denn die dünneren Kunststoffinterlayer sind kostengünstiger zu beziehen und einfacher zu verarbeiten.

Gemäß einer bevorzugten Ausgestaltungsvariante der Erfindung kann es vorgesehen sein, dass die Brandschutzverglasung symmetrisch zu ihrer parallel zu den beiden Seitenflächen verlaufenden Mittelebene ausgebildet ist, und dass die Dicken der beiden Kunststoffinterlayer einander mit einer Maßtoleranz von ± 10 % entsprechen. Auf diese Weise ergibt sich eine Kernkomponente der Verbundscheibe, die im Wesentlichen spannungsfrei verformungsfrei auch im Autoklavverfahren gefertigt werden kann. Zudem bietet die Symmetrie der Kernkomponente (Brandschutzverglasung und zwei Kunststoffinterlayer) den gleichen Angriffs- und Brandschutz von beiden Seiten.

Die Erfindung wird im Folgenden anhand von in den Zeichnungen dargestellten Ausführungsbeispielen näher erläutert. Es zeigen:
Figur 1 eine nicht erfindungsgemäße Verbundscheibe in Teildarstellung und Seitenansicht;
Figur 2 eine Baureihenfolge für die Verbundscheibe gemäß Figur 1 in schematischer Darstellung;
Figur 3 eine erfindungsgemäße Ausführungsvariante einer Verbundscheibe in Explosionsdarstellung und Baureihenfolge in schematischer Ansicht; und
Figur 4 die Verbundscheibe gemäß Figur 3 als Zusammenbau sowie in Seitendarstellung und in Teilansicht.

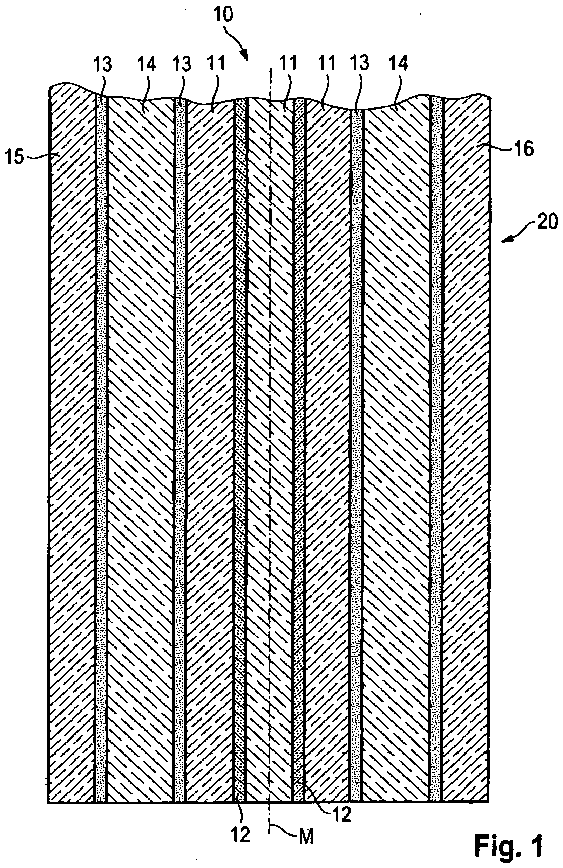

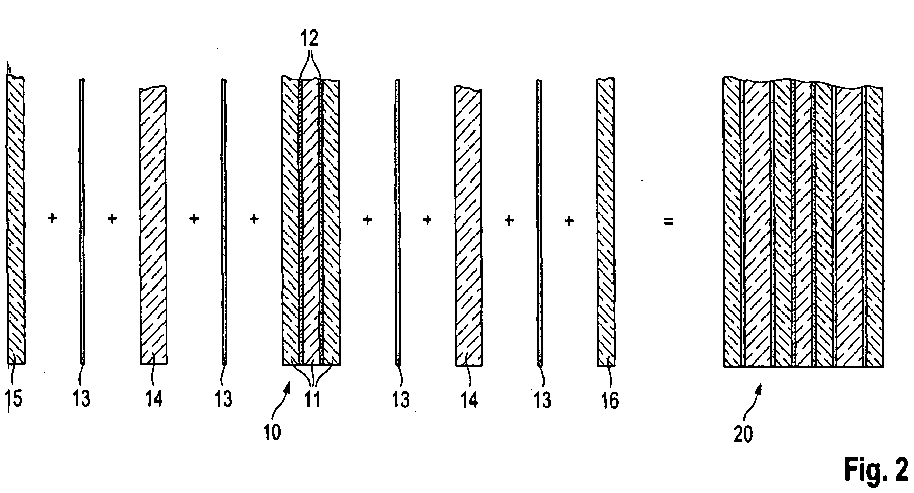

Wie die Zeichnungen erkennen lassen, besteht die Verbundscheibe 20 aus mehreren Bauteilen. Dabei ist zunächst eine gängige Brandschutzverglasung 10 verwendet. Diese besteht aus mehreren zueinander parallelen Glasscheiben 11, beispielsweise Kalknatronglasscheiben, zwischen denen intumeszierende Schichten 12 angeordnet sind. Beispielsweise können mit organischen Verbindungen versetzte Alkalisilikate oder Schichten mit aus Salz gefüllten wässrigen Acrylpolymeren (Hydrogele) als intumeszierende Schichten 12 verwendet sein. Auf die beiden Seitenflächen der Brandschutzverglasung 10 werden planparallel PUR-Folien aufgelegt, die als Haftvermittler 13 dienen. Dementsprechend sollen die Haftvermittler 13 Kunststoffinterlayer 14 mit den Seitenflächen der Brandschutzverglasung 10 stoffschlüssig verbinden. Hierzu werden die Kunststoffinterlayer 14, die als Kunststofffolien, beispielsweise bestehend aus Polycarbonat oder Polymethylmetaacrylat, ausgebildet sind, auf die der Brandschutzverglasung 10 abgekehrten Seiten der Haftvermittler 13 flächig aufgelegt. Anschließend wird auf die Kunststoffinterlayer 14 jeweils als Haftvermittler 13 eine weitere Folie aufgelegt. Vorzugsweise sind die Haftvermittler 13 alle gleich ausgebildet, um die Fertigung zu vereinfachen. Abschließend werden auf die äußeren Haftvermittler 13 jeweils eine Glas- oder Glaskeramikscheibe 15, 16 aufgelegt. Beispielsweise kann die Glasscheibe 15 als Floatglas ausgebildet sein. Die Scheibe 16 kann beispielsweise von einem Verbundsicherheitsglas gebildet sein, das zwei oder mehrere Glasscheiben, insbesondere Kalknatronscheiben, aufweist, die über eine PVB-Folie miteinander verbunden sind. Mit den beiden Glas- oder Glaskeramikscheiben 15, 16 ist der Laminatverbund gemäß den Figuren 1 und 2 komplettiert.

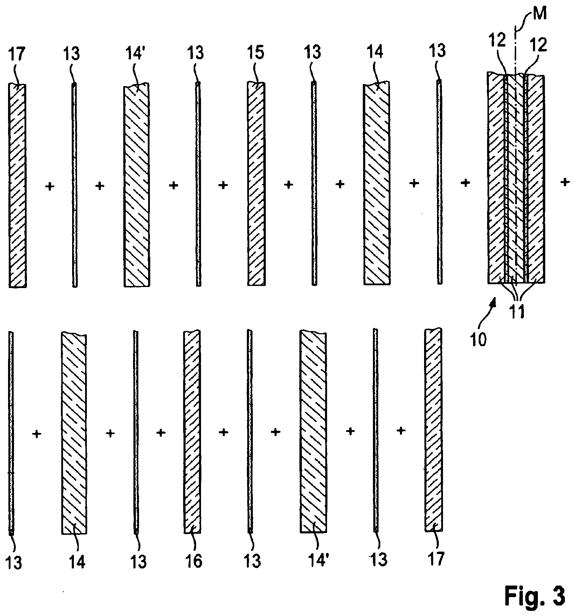

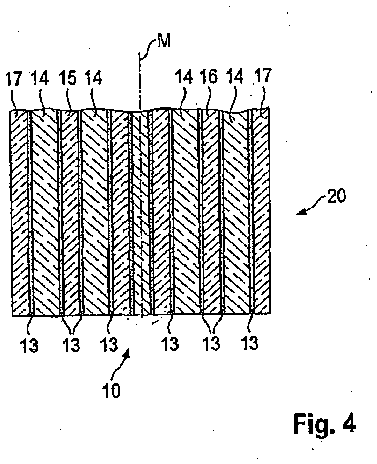

Gemäß dem Ausführungsbeispiel nach den Figuren 3 und 4 werden zusätzlich an die beiden Glas- oder Glaskeramikscheiben 15, 16 außenseitig jeweils ein weiterer Kunststoffinterlayer 14' und eine weitere Glas- oder Glaskeramikscheibe 17 angereiht. Hierzu werden auf die der Brandschutzverglasung 10 abgewandten Seiten der Glas- oder Glaskeramikscheiben 15, 16 wieder Haftvermittler 13, vorliegend eine PUR-Folie, aufgelegt. Auf diese PUR-Folie ist der weitere Kunststoffinterlayer 14' aufgelegt. Zur Ankopplung der weiteren Glas- oder Glaskeramikscheibe 17 wird ebenfalls ein Haftvermittler 13 in Form einer PUR-Folie verwendet, wie dies die Figur 3 veranschaulicht.

Der gemäß den Figuren 1 und 2 bzw. 3 und 4 gebildete Laminatverbund wird im Sackverfahren in einen Autoklavofen eingebracht. Dort wird unter erhöhter Temperatur und Druckeinwirkung eine Verbindung der einzelnen Scheibenelemente erreicht. Beispielsweise kann die Autoklavtemperatur größer 80°C, insbesondere beispielsweise 90°C, betragen. Der aufgebaute Druck im Autoklavofen sollte kleiner 5 bar betragen. Abhängig von den gewählten Temperatur- und Druckwerten kann dann die Verweildauer im Autoklavofen gewählt werden, bis die Glas- bzw. Glaskeramikscheiben 15, 16, 17, die Kunststoffinterlayer 14, 14' und die Brandschutzverglasung 10 unter Aufschmelzung der Haftvermittler 13 miteinander zu einem festen Verbund verbacken sind.

Wie die Zeichnungen erkennen lassen, ist die Verbundscheibe 20 vollsymmetrisch zur Mittelebene M der Brandschutzverglasung 10, die parallel zu den beiden Seiten der Brandschutzverglasung 10 verläuft, aufgebaut. Durch die zentrische Anordnung der Brandschutzverglasung 10 und die beidseitige Anordnung des Kunststoffinterlayers 14 bzw. der weiteren Kunststoffinterlayer 14' werden besonders hohe angriffshemmende Eigenschaften und Brandwiderstandseigenschaften erreicht. Insbesondere lässt sich durch die beidseitige Anordnung der Kunststoffinterlayer 14 bzw. der weiteren Kunststoffinterlayer 14' auch die Fertigung im Autoklavverfahren realisieren, da keine verformenden Spannungen in das Bauteil eingebracht werden.

Abhängig von der gewünschten Schutzkategorie kann die Dicke der Brandschutzverglasung 10 und/oder die Dicke der Kunststoffinterlayer 14, 14' variiert werden. Zusätzlich lässt sich auch über die Glas-/Glaskeramikscheiben 15, 16, 17 noch eine anwendungsspezifische Variierung der Produkteigenschaften einstellen. Beispielsweise lassen sich anstelle der vorgenannten Floatglasscheiben für die Glasscheibe 15 und/oder anstelle des Verbundsicherheitsglases (Glasscheibe 16) chemisch oder thermisch vorgespannte Gläser einsetzen. Gleiches gilt auch für die weiteren Glas- oder Glaskeramikscheiben 17. Beispielsweise kann ein chemisch vorgespanntes Lithium-Aluminium-Silikatglas oder ein thermisch vorgespanntes Borosilikatglas (beispielsweise vom Typ SCHOTT-PyranS) verwendet sein. Diese Elemente erhöhen die Brandschutzwirkung der Verbundscheibe 20. Für die Brandschutzverglasung 10 kann beispielsweise das Produkt Pyranova 2.0.11 der SCHOTT AG mit einer Dicke größer als 7 mm eingesetzt werden. Die Dicke der Glas-/Glaskeramikscheiben 15, 16 beträgt vorteilhafterweise ≥ 2 mm und ≤ 5 mm.

Abhängig von der Auslegung der einzelnen Komponenten der Verbundscheibe 20 gemäß den Figuren 1 und 2 kann eine entsprechende Klassifizierung für den Feuerwiderstand nach EN 1363 beziehungswiese gegen Durchbruch nach EN 356 erreicht werden. Bei Verwendung einer Brandschutzverglasung 10 des oben erwähnten Typs Pyranova 2.0.11 der SCHOTT AG lassen sich Feuerwiderstandsklassifizierungen nach EN 1363 von EI 30 erreichen. Die Verwendung von Polycarbonatfolien für die Kunststoffinterlayer 14 mit einer Dicke von 0,78 mm führen zu einer Widerstandsklassifizierung von P8B nach EN 356. Polycarbonatfolien mit der Stärke von 0,64 mm ermöglichen eine Widerstandsklasse gegen Durchbruch von P6B nach EN 356.

Infolge der Verwendung der Haftvermittler 13 in Verbindung mit dem Autoklawerfahren wird eine zuverlässige Verbindung der einzelnen Scheibenkomponenten erreicht. Insbesondere führt die Bestrahlungsprüfung nach DIN EN 12543-4 zu keiner Veränderung der Klebschicht im Klimawechseltest (-20/60°C, 8h-Zyklus über eine Woche). Das Laminat wird bei diesem Test nicht beschädigt.

Bei dem Ausführungsbeispiel nach den Figuren 3 und 4 sind die Glas- oder Glaskeramikscheiben 15, 16 zwischen zwei Kunststoffinterlayern 14, 14' angeordnet. Hierdurch wird eine hohe Sicherheit gegen Durchdringung erreicht. Diese wird zudem noch verbessert, wenn in dieser Kombination die Glas- oder Glaskeramikscheibe 15, 16 als Borosilikatglasscheibe ausgeführt ist. Insbesondere kann dann die Dicke der Glas- oder Glaskeramikscheibe 15, 16 vorteilhafterweise im Bereich zwischen ≥ 2 mm und ≤ 8 mm gewählt werden. Bei dem Ausführungsbeispiel nach den Figuren 3 und 4 sind die abschließenden weiteren Glasscheiben 17 von einem Floatglas gebildet. Dabei beträgt die Dicke des Floatglases vorliegend im Bereich zwischen 7 und 9 mm, insbesondere 8 mm.

Abhängig von der Auslegung der einzelnen Komponenten der Verbundscheibe 20 gemäß den Figuren 3 und 4 kann eine entsprechende Klassifizierung für den Feuerwiderstand nach DIN EN 357 EI 30, eine Durchbruchshemmung P8B nach DIN EN 356 und WK4 nach ENV 1627 erreicht werden. Die Verwendung von Polycarbonat für die Kunststoffinterlayer 14 sowie die weiteren Kunststoffinterlayer 14' mit jeweils einer Dicke von 0,78 mm führen insbesondere zu dieser Widerstandsklassifizierung von P8B und WK4.

## Patentansprüche

1. Verbundscheibe (20) mit einer flächenförmigen Brandschutzverglasung (10) bestehend aus mehreren zueinander parallelen Glasscheiben (11), zwischen denen intumeszierende Schichten (12) angeordnet sind,
wobei auf den beiden gegenüberliegenden Seitenflächen der Brandschutzverglasung (10) mittelbar oder unmittelbar jeweils mindestens ein Kunststoffinterlayer (14) angeordnet ist,
wobei auf den der Brandschutzverglasung (10) abgewandten Seiten der Kunststoffinterlayer (14) jeweils wenigstens eine Glas- oder Glaskeramikscheibe (15, 16) angeordnet ist,
wobei die Kunststoffinterlayer (14) aus Polycarbonat oder Polymethylmethacrylat bestehen, und wobei die Kunststoffinterlayer (14) eine Dicke im Bereich zwischen 2 mm bis 8 mm aufweisen und wobei die Kunststoffinterlayer (14) unter Zwischenlage einer Haftvermittlerschicht (13) stoffschlüssig mit den Seiten der Brandschutzverglasung (10) und die Glas- oder Glaskeramikscheiben (15, 16) unter Zwischenlage einer Haftvermittlerschicht (13) stoffschlüssig mit den Kunststoffinterlayern (14) verbunden sind,
und wobei auf der der Brandschutzverglasung (10) abgewandten Seite wenigstens einer der Glas- oder Glaskeramikscheiben (15, 16) ein weiterer Kunststoffinterlayer (14') angeordnet ist.

2. Verbundscheibe (20) Anspruch 1,
**dadurch gekennzeichnet,**
**dass** die Haftvermittlerschicht (13) aus Polyurethan besteht, insbesondere von einer Polyurethanfolie gebildet ist.

3. Verbundscheibe (20) nach Anspruch 1 oder 2,
**dadurch gekennzeichnet,**
**dass** die Brandschutzverglasung (10) eine Dicke von ≥7 mm aufweist.

4. Verbundscheibe (20) nach einem der Ansprüche 1 bis 3,
**dadurch gekennzeichnet,**
**dass** die Glas- oder Glaskeramikscheibe (15, 16) von einem Floatglas, gefloatete Glaskeramik oder einem Verbundsicherheitsglas gebildet ist.

5. Verbundscheibe (20) nach einem der Ansprüche 1 bis 4,
**dadurch gekennzeichnet,**
**dass** die Summe der Dicken der beiden Kunststoffinterlayer (14) kleiner oder gleich der Dicke der Brandschutzverglasung (10) ist.

6. Verbundscheibe (20) nach einem der Ansprüche 1 bis 5,
**dadurch gekennzeichnet,**
**dass** die Summe der Dicken der beiden Kunststoffinterlayer (14) kleiner oder gleich der Dicke eines Kunststoffinterlayers (14) ist, die für eine entsprechende angriffshemmende Klassifizierung erforderlich ist.

7. Verbundscheibe (20) nach einem der Ansprüche 1 bis 6,
**dadurch gekennzeichnet,**
**dass** die Brandschutzverglasung (10) symmetrisch zu ihrer parallel zu den beiden Seitenflächen verlaufenden Mittelebene (M) ausgebildet ist, und
**dass** die Dicken der beiden Kunststoffinterlayer (14) einander mit einer Maßtoleranz von ±10% entsprechen.

8. Verbundscheibe (20) nach einem der Ansprüche 1 bis 7,
**dadurch gekennzeichnet,**
**dass** auf der der Brandschutzverglasung (10) abgewandten Seite des weiteren Kunststoffinterlayers (14') eine weitere Glas- oder Glaskeramikscheibe (17) angeordnet ist.

9. Verbundscheibe (20) nach einem der Ansprüche 1 bis 8
**dadurch gekennzeichnet,**
**dass** die Dicke des oder der weiteren Kunststoffinterlayer/s (14') größer ist als die Dicke der Kunststoffinterlayer (14) und/oder dass die Dicke der weiteren Kunststoffinterlayer (14') im Bereich zwischen 2 bis 8 mm gewählt ist, und/oder dass die Summe der Dicken der beiden weiteren Kunststoffinterlayer (14') ≤ der Dicke der Brandschutzverglasung (10) gewählt ist.

10. Verbundscheibe (20) nach einem der Ansprüche 1 bis 9,
**dadurch gekennzeichnet,**
**dass** die Dicke der weiteren Glasscheiben oder Glaskeramikscheiben (17) größer gewählt ist/sind als die Dicke der Glas- oder Glaskeramikscheiben (5, 16) und/oder dass die Dicke der weiteren Glasscheiben oder Glaskeramikscheiben (17) im Bereich zwischen 4mm und 12mm gewählt ist,
und/oder dass die Summe der Dicken der beiden weiteren Glasscheiben oder Glaskeramikscheiben (17) größer ist als die Dicke der Brandschutzverglasung (10).

## Claims

1. Composite pane (20) having a sheet-like fire protection glazing (10), consisting of a plurality of glass panes (11) which are parallel to one another and between which there are arranged intumescent layers (12),
wherein at least one polymer interlayer (14) is arranged in each case indirectly or directly on the two opposing lateral faces of the fire protection glazing (10),
wherein at least one glass or glass-ceramic pane (15, 16) is arranged in each case on those sides of the polymer interlayers (14) which are remote from the fire protection glazing (10),
wherein the polymer interlayers (14) consist of polycarbonate or polymethyl methacrylate, and wherein the polymer interlayers (14) have a thickness in the range of between 2 mm and 8 mm and wherein the polymer interlayers (14) are connected substance-bonded to the sides of the fire protection glazing (10) with the interposition of an adhesion-promoting layer (13) and the glass or glass-ceramic panes (15, 16) are connected substance-bonded to the polymer interlayers (14) with the interposition of an adhesion-promoting layer (13),
and wherein a further polymer interlayer (14') is arranged on that side of at least one of the glass or glass-ceramic panes (15, 16) which is remote from the fire protection glazing (10).

2. Composite pane (20) according to claim 1,
**characterized**
**in that** the adhesion-promoting layer (13) consists of polyurethane, in particular is formed by a polyurethane film.

3. Composite pane (20) according to claims 1 or 2,
**characterized**
**in that** the fire protection glazing (10) has a thickness of ≥ 7 mm.

4. Composite pane (20) according to one of claims 1 to 3,
**characterized**
**in that** the glass or glass-ceramic pane (15, 16) is formed by a float glass, a floated glass-ceramic or a composite safety glass.

5. Composite pane (20) according to one of claims 1 to 4,
**characterized**
**in that** the sum total of the thicknesses of the two polymer interlayers (14) is less than or equal to the thickness of the fire protection glazing (10).

6. Composite pane (20) according to one of claims 1 to 5,
**characterized**
**in that** the sum total of the thicknesses of the two polymer interlayers (14) is less than or equal to the thickness of a polymer interlayer (14) which is required for an appropriate attack-resistant classification.

7. Composite pane (20) according to one of claims 1 to 6,
**characterized**
**in that** the fire protection glazing (10) is formed symmetrically in relation to its centre plane (M) running parallel to the two lateral faces, and
**in that** the thicknesses of the two polymer interlayers (14) correspond to one another with a size tolerance of ± 10%.

8. Composite pane (20) according to one of claims 1 to 7,
**characterized**
**in that** a further polymer interlayer (14') is arranged on that side of at least one of the glass or glass-ceramic panes (15, 16) which is remote from the fire protection glazing (10).

9. Composite pane (20) according to one of claims 1 to 8,
**characterized**
**in that** the thickness of the further polymer interlayer(s) (14') is greater than the thickness of the polymer interlayers (14) and/or in that the thickness of the further polymer interlayers (14') is selected to be in the range of between 2 and 8 mm and/or
**in that** the sum total of the thicknesses of the two further polymer interlayers (14') is selected to be ≤ to the thickness of the fire protection glazing (10).

10. Composite pane (20) according to one of claims 1 to 9,
**characterized**
**in that** the thickness of the further glass panes or glass-ceramic panes (17) is selected to be greater than the thickness of the glass or glass-ceramic panes (15, 16)
and/or in that the thickness of the further glass panes or glass-ceramic panes (17) is selected to be in the range of between 4 mm and 12 mm and/or in that the sum total of the thicknesses of the two further glass panes or glass-ceramic panes (17) is greater than the thickness of the fire protection glazing (10).

## Revendications

1. Vitre feuilletée (20) présentant un vitrage (10) plat de protection contre l'incendie constitué de plusieurs vitres (11) mutuellement parallèles entre lesquelles des couches intumescentes (12) sont disposées,
au moins une couche intermédiaire (14) en matière synthétique étant disposée directement ou indirectement sur les deux surfaces latérales opposées du vitrage (10) de protection contre l'incendie,
une vitre (15, 16) en verre ou en vitrocéramique étant disposée sur chacun des côtés de la couche intermédiaire (14) en matière synthétique non tournée vers le vitrage (10) de protection contre l'incendie,
les couches intermédiaires (14) en matière synthétique étant constituées de polycarbonate ou de poly(méthacrylate de méthyle), les couches intermédiaires (14) en matière synthétique présentant une épaisseur comprise dans la plage de 2 mm à 8 mm and wherein les couches intermédiaires (14) en matière synthétique sont raccordées en correspondance de matière aux côtés du vitrage (10) de protection contre l'incendie après intercalement d'une couche (13) de renforcement de l'adhérence et les vitres (15, 16) en verre ou en vitrocéramique sont raccordées en correspondance de matière aux couches intermédiaires (14) en matière synthétique en intercalant une couche (13) de renforcement de l'adhérence,
et en ce que sur le côté non tourné vers le vitrage (10) de protection contre l'incendie d'au moins une des vitres (15, 16) en verre ou en vitrocéramique est disposée une autre couche intermédiaire (14') en matière synthétique.

2. Vitre feuilletée (20) selon la revendication 1, **caractérisée en ce que** la couche (13) de renforcement de l'adhérence est constituée de polyuréthane et en particulier est formée d'une feuille de polyuréthane.

3. Vitre feuilletée (20) selon la revendication 1 ou 2, **caractérisée en ce que** le vitrage (10) de protection contre l'incendie présente une épaisseur ≥ 7 mm.

4. Vitre feuilletée (20) selon l'une des revendications 1 à 3, **caractérisée en ce que** la vitre (15, 16) en verre ou en vitrocéramique est formée d'un verre flotté, d'une vitrocéramique flottée ou d'un verre feuilleté de protection.

5. Vitre feuilletée (20) selon l'une des revendications 1 à 4, **caractérisée en ce que** la somme des épaisseurs des deux couches intermédiaires (14) en matière synthétique est inférieure ou égale à l'épaisseur du vitrage (10) de protection contre l'incendie.

6. Vitre feuilletée (20) selon l'une des revendications 1 à 5, **caractérisée en ce que** la somme des épaisseurs des deux couches intermédiaires (14) en matière synthétique est inférieure ou égale à l'épaisseur d'une couche intermédiaire (14) en matière synthétique nécessaire pour la classification de ralentissement du feu correspondante.

7. Vitre feuilletée (20) selon l'une des revendications 1 à 6, **caractérisée en ce que** le vitrage (10) de protection contre l'incendie est symétrique par rapport à son plan central (M) qui s'étend parallèlement à ses deux surfaces latérales et **en ce que** les épaisseurs des deux couches intermédiaires (14) en matière synthétique se correspondent l'une à l'autre avec une tolérance de dimensions de ± 10 %.

8. Vitre feuilletée (20) selon l'une des revendications 1 à 7, **caractérisée en ce que** sur le côté non tourné vers le vitrage (10) de protection contre l'incendie de l'autre couche intermédiaire (14') en matière synthétique est disposée une autre vitre (17) en verre ou en vitrocéramique.

9. Vitre feuilletée (20) selon l'une des revendications 1 à 8, **caractérisée en ce que** l'épaisseur de la ou des autres couches intermédiaires (14') en matière synthétique est supérieure à l'épaisseur de la couche intermédiaire (14) en matière synthétique et/ou **en ce que** l'épaisseur de l'autre couche intermédiaire (14') en matière synthétique est sélectionnée dans la plage comprise entre 2 et 8 mm et/ou en ce que la somme des épaisseurs des deux autres couches intermédiaires (14') en matière synthétique est ≤ l'épaisseur du vitrage (10) de protection contre l'incendie.

10. Vitre feuilletée (20) selon l'une des revendications 1 à 9, **caractérisée en ce que** l'épaisseur des autres vitres en verre ou vitres en vitrocéramique (17) est supérieure à l'épaisseur des vitres (15, 16) en verre ou en vitrocéramique et/ou **en ce que** l'épaisseur des autres vitres en verre ou vitres (17) en vitrocéramique est sélectionnée dans la plage comprise entre 4 mm et 12 mm et/ou **en ce que** la somme des épaisseurs des autres vitres en verre ou des autres vitres (17) en vitrocéramique est supérieure à l'épaisseur du vitrage (10) de protection contre l'incendie.
